Europäisches Patentamt

European Patent Office

Office européen des brevets

(19)

(11) Veröffentlichungsnummer: **0 538 647 A1**

(12) **EUROPÄISCHE PATENTANMELDUNG**

(21) Anmeldenummer: **92116513.0**

(22) Anmeldetag: **26.09.92**

(51) Int. Cl.5: **C01C 1/02**, B01D 53/34

(30) Priorität: **24.10.91 CH 3113/91**

(43) Veröffentlichungstag der Anmeldung:
**28.04.93 Patentblatt 93/17**

(84) Benannte Vertragsstaaten:
**AT BE CH DE DK ES FR GB IT LI LU NL SE**

(71) Anmelder: **VON ROLL AG**

**CH-4563 Gerlafingen(CH)**

(72) Erfinder: **Rüegg, Hans**
**Bremgartenstrasse 55 A**
**CH-5610 Wohlen(CH)**

(74) Vertreter: **Patentanwälte Schaad, Balass & Partner**
**Dufourstrasse 101 Postfach**
**CH-8034 Zürich (CH)**

(54) **Verfahren zur Rückgewinnung von Ammoniak aus den Rückständen von Rauchgasen.**

(57) Ammoniak wird aus den bei der Reinigung von Rauchgasen anfallenden Rückständen zurückgewonnen. Hierfür werden die Trockenrückstände mit Wasser vermischt. Sofern die wässrige Mischung sauer oder neutral reagiert, wird sie durch Alkalizugabe alkalisch gestellt. Dann wird durch Wärmeeinwirkung das Ammoniak zusammen mit Wasserdampf aus dem Gemisch ausgetrieben.

EP 0 538 647 A1

Die Erfindung betrifft ein Verfahren zur Rückgewinnung von Ammoniak aus den bei der Reinigung von Rauchgasen anfallenden Rückständen nach dem Oberbegriff von Anspruch 1.

Rauchgase aus Verbrennungsanlagen können zur Entfernung von Stickoxiden ($NO_x$) mit Ammoniak oder mit Stoffen, die Ammoniak generieren, versetzt werden. Dieses reagiert dann in einer Reaktionszone mit den Stickoxiden, wobei die Stickoxide zu elementarem Stickstoff ($N_2$) reduziert werden. Um mit Sicherheit eine vollständige Entfernung der Stickoxide zu erzielen, setzt man vorzugsweise einen Überschuss an Ammoniak ein. Das überschüssige Ammoniak wird zum Teil an festen Teilen im Rauchgas, beispielsweise Flugasche, adsorbiert; zum Teil wird es im nachgeschalteten Nasswäscher aus dem Rauchgas abgeschieden und fällt als festes Salz an, beispielsweise beim Trocknen des Waschwassers aus der Rauchgaswaschanlage. In allen Fällen ist die Rückgewinnung des überschüssigen Ammoniaks aus Gründen des Umweltschutzes und der Wirtschaftlichkeit erwünscht.

Zur Rückgewinnung dieses Ammoniaks sind verschiedene Verfahren bekannt. In der CH-A 673 593 wird die Entfernung von Ammoniak aus dem Waschwasser einer Nasswaschanlage beschrieben. Dabei wird das Wasser alkalisch gestellt und das Ammoniak wird mittels Strippen mit Luft ausgetrieben. Dieses Verfahren eignet sich nicht zur Behandlung fester Rückstände.

Die DE-A1 35 26 756 beschreibt ein Verfahren, bei dem an Flugasche adsorbiertes Ammoniak durch Erhitzen der Flugasche desorbiert wird. Dabei muss die Flugasche mindestens auf 300° C erhitzt werden. Dadurch werden neben Ammoniak auch Säuren, wie HCl, $SO_2$, $SO_3$ sowie die leichtflüchtigen Metalle Quecksilber, Cadmium und Arsen freigesetzt, die wieder mit aufwendigen Mitteln abgeschieden werden müssen.

Bei beiden bekannten Verfahren fällt das zurückgewonnene Ammoniak im Gemisch mit Luft an. Dieses Gemisch wird als Sekundärluft in die Verbrennungsanlage (Kessel) zurückgeführt, wo infolge der herrschenden hohen Temperaturen Ammoniak zu Stickoxiden verbrennen kann. Dadurch wird genau das Gegenteil der beabsichtigten Entfernung von Stickoxiden erzielt. Wird eine Wiederverwertung dieses Ammoniaks gewünscht, so müssen zusätzliche aufwendige Reinigungs- und Brennverfahren eingesetzt werden.

Ziel der vorliegenden Erfindung ist es, ein einfaches und wirtschaftliches Verfahren vorzuschlagen, das die Rückgewinnung wiederverwertbaren Ammoniaks sowohl aus der Flugasche wie aus anderen bei der Rauchgasreinigung anfallenden festen Rückständen, z.B. aus jenem des Waschwassers oder der Trockenreinigung, erlaubt.

Dieses Ziel wird durch das Verfahren gemäss Anspruch 1 erreicht. Besonders vorteilhafte Ausführungsformen der Erfindung bilden den Gegenstand der abhängigen Ansprüche 2 bis 9.

Durch die ungewöhnliche Massnahme der Neubefeuchtung eines bereits getrockneten und/oder trocken anfallenden Rückstandes mit - sofern erforderlich - gleichzeitigem Alkalischstellen und nachfolgender Wärmebehandlung wird erfindungsgemäss ein Wasserdampf-/Ammoniakgemisch gewonnen, das entweder als solches oder nach dem Kondensieren als ammoniakalkalische Lösung wiederverwendet werden kann. Vorzugsweise wird das kondensierte Gemisch, d.h. eine wässrige Ammoniaklösung erneut zur reduktiven Behandlung der Rauchgase zur Entfernung von Stickoxiden eingesetzt.

Da das überschüssige Ammoniak durch das erfindungsgemässe Verfahren praktisch vollständig zurückgewonnen werden kann, kann es in einem beliebig grossen Ueberschuss für die Entfernung von Stickoxiden eingesetzt werden.

Mit dem erfindungsgemässen Verfahren kann aus allen bei der Rauchgasreinigung anfallenden Rückständen wie Flugasche, Rückstände der trockenen Rauchgasreinigung und der nassen Rauchgaswäsche, Ammoniak zurückgewonnen werden. Vorzugsweise liegt ein erfindungsgemäss zu behandelnder Rückstand als staubtrockenes Produkt vor.

Das erfindungsgemässe Verfahren ist sowohl für Rückstände, die bei der Reinigung von Rauchgasen, die bei der Verbrennung von fossilen Brennstoffen anfallen, als auch für Rückstände, die bei der Reinigung von Rauchgasen anderer Materialien wie Haushalt- oder Industriemüll anfallen, geeignet. Dabei kann das zurückzugewinnende Ammoniak in chemisch und/oder physikalisch gebundener Form vorliegen.

Rückstände verschiedenen Ursprungs, z.B. Flugasche und der bei der Sprühtrocknung des Waschwassers aus der Nasswäsche anfallende Staub, können erfindungsgemäss zusammen behandelt werden.

Die dem Trockenrückstand zugegebene Wassermenge kann in einem breiten Bereich, in Abhängigkeit von verschiedenen Faktoren wie Art des Trockenrückstandes, gewünschte verbleibende Restwassermenge variieren. 80 Gew.% Wassezugabe, bezogen auf den Trockenrückstand, hat sich für die Behandlung von eingedampften Rückständen aus der nassen Rauchgasreinigung als günstig erwiesen.

Als Alkalien werden hauptsächlich aus wirtschaftlichen Gründen Calciumhydroxid, Calciumoxid oder Natriumhydroxid verwendet. Wenn bereits die Trockenrückstände genügend Alkali enthalten, erübrigt sich eine Zugabe. Dies ist vor allem bei Rückständen der trockenen Rauchgasreinigung der Fall. Wenn Calciumoxid (gebrannter Kalk) als Alkali eingesetzt wird, kann dessen Reaktionswärme mit Wasser allein

EP 0 538 647 A1

oder zusammen mit einer zusätzlichen Wärmequelle für die Verdampfung des Wassers und zum Austreiben des Ammoniaks verwendet werden.

Vorteilhaft erfolgt die Wärmeeinwirkung und das Eindampfen der Mischung in einem Dünnschichtverdampfer, der mit Wasserdampf beheizt wird. Das dabei anfallende entmineralisierte Wasser kann im Kreislauf geführt werden.

Der Endwassergehalt des zurückbleibenden ammoniakfreien Rückstandes kann nach Wunsch eingestellt werden. Dies ist ein weiterer Vorteil des erfindungsgemässen Verfahrens. Durch einen kleinen Wasseranteil kann die Staubemission vermindert und eine Volumenreduktion erzielt werden. Entsprechende gesetzliche Vorschriften über eine Mindestwassermenge existieren beispielsweise in der Bundesrepublik Deutschland.

Die Erfindung wird anhand der nachfolgenden Beispiele weiter veranschaulicht.

Beispiele 1 bis 11

Ammoniak wurde aus dem im Sprühtrockner anfallenden Trockenrückstand zurückgewonnen. Der verwendete Trockenrückstand enthielt 7 g Ammoniak pro 100 g Trockenrückstand Es wurden jeweils 100 g Trockenrückstand mit 80 bzw. 100 g Wasser und 1,3 bis 2,0 äquivalentem CaO, bezogen auf die Menge des Ammoniaks, versetzt. Das Gemisch aus Trockenrückstand, Wasser und CaO wurde in einen Dünnschichtverdampfer gegeben, wo ein Teil des Wassers verdampft wurde. Gleichzeitig wurde mindestens ein Teil des im Trockenrückstand in Form von Ammoniumsalz vorliegenden Ammoniaks freigesetzt und zurückgewonnen und erneut der Entstickung zugeführt.

Die Versuchsbedingungen und die Resultate sind in der nachfolgenden Tabelle zusammengestellt.

3

Tabelle

| Beispiel | Wasser-zugabe g | CaO-Zugabe äquiv. | NH$_3$ regeneriert g | Wasser verdampft g | NH$_3$ im Rückstand g | Trockenstubstanz im Rückstand % |
|---|---|---|---|---|---|---|
| 1 | 100 | 1,3 | 5,02 | 22,91 | 1,98 | 55,2 |
| 2 | 100 | 1,3 | 5,98 | 34,67 | 0,70 | 59,0 |
| 3 | 100 | 1,3 | 6,13 | 53,97 | 0,48 | 67,1 |
| 4 | 100 | 1,3 | 6,36 | 93,28 | 0,23 | 93,3 |
| 5 | 80 | 1,5 | 6,73 | 31,52 | 0,27 | 65,8 |
| 6 | 80 | 1,5 | 7,00 | 45,95 | --- | 73,2 |
| 7 | 80 | 1,5 | 7,00 | 60,00 | --- | 82,3 |
| 8 | 100 | 2,0 | 4,88 | 12,55 | 2,12 | 52,1 |
| 9 | 100 | 2,0 | 7,00 | 40,54 | --- | 61,0 |
| 10 | 100 | 2,0 | 7,00 | 51,66 | --- | 65,8 |
| 11 | 100 | 2,0 | 7,00 | 74,98 | --- | 78,8 |

## Patentansprüche

1. Verfahren zur Rückgewinnung von Ammoniak aus bei der Reinigung von Rauchgasen anfallenden Rückständen, dadurch gekennzeichnet, dass man die Trockenrückstände mit Wasser vermischt, sofern die wässrige Mischung sauer oder neutral reagiert, durch Alkalizugabe alkalisch stellt und durch

4

Wärmeeinwirkung das Ammoniak zusammen mit Wasserdampf aus dem Gemisch austreibt.

2. Verfahren nach Anspruch 1, dadurch gekennzeichnet, dass man das Wasser aus der Mischung nicht vollständig austreibt.

3. Verfahren nach einem der vorangehenden Ansprüche, dadurch gekennzeichnet, dass man Ammoniak aus dem Trockenrückstand des Waschwassers aus einer Nasswaschanlage zurückgewinnt.

4. Verfahren nach einem der vorangehenden Ansprüche, dadurch gekennzeichnet, dass man Ammoniak aus dem Rückstand des Staubabscheiders einer Rauchgasreinigungsanlage zurückgewinnt.

5. Verfahren nach einem der vorangehenden Ansprüche, dadurch gekennzeichnet, dass man als Alkali Calciumoxid, Calciumhydroxid und/oder Natriumhydroxid zugibt.

6. Verfahren nach einem der vorangehenden Ansprüche, dadurch gekennzeichnet, dass man die 1- bis 3-fache, vorzugsweise die 1,5- bis 2-fache, stöchiometrische Menge an Alkali, bezogen auf den Ammoniakgehalt des Trockenrückstandes, zugibt.

7. Verfahren nach einem der vorangehenden Ansprüche, dadurch gekennzeichnet, dass man das Gemisch in einem Verdampfer, vorzugsweise in einem Dünnschichtverdampfer, erwärmt.

8. Verfahren nach einem der vorangehenden Ansprüche, dadurch gekennzeichnet, dass man 15-100 Gew.% Wasser, bezogen auf den Trockenrückstand, zugibt.

9. Verfahren nach einem der vorangehenden Ansprüche, dadurch gekennzeichnet, dass man Calciumoxid als Alkali in einer 2-fachen stöchiometrischen Menge, bezogen auf das zurückzugewinnende Ammoniak, zugibt und ohne äussere Wärmezufuhr, unter Ausnützung der Reaktionswärme des Calciumoxids mit Wasser, den Wasserdampf und das Ammoniak austreibt.

10. Verfahren nach einem der vorangehenden Ansprüche, dadurch gekennzeichnet, dass man das ausgetriebene Gasgemisch aus Wasserdampf und Ammoniak durch Abkühlung kondensiert.

11. Verfahren nach Anspruch 10, dadurch gekennzeichnet, dass man das Kondensat in die Entstickungs-Reaktionszone zurückführt.

Europäisches Patentamt

Nummer der Anmeldung

EP 92 11 6513

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3 815 963 (GEBR. KNAUF WESTDEUTSCHE GIPSWERKE KG) <br> * das ganze Dokument * <br> --- | 1,4,5, 10,11 | C01C1/02 <br> B01D53/34 |
| X | DE-A-3 711 503 (L & C STEINMÜLLER GMBH) <br> * das ganze Dokument * <br> --- | 1,4,5 | |
| A | A.F.HOLLEMAN, E.WIBERG 'Lehrbuch der anorganischen Chemie' <br> 1985 , WALTER DE GRUYTER , BERLIN <br> * Seite 913: letzte Absatz * <br> --- | 9 | |
| A | R.H.PERRY, D.W.GREEN 'Perry's Chemical Engineers' Handbook' <br> 1985 , MCGRAW-HILL , NEW YORK <br> * Seite 3-127 * <br> ----- | 9 | |

| | RECHERCHIERTE SACHGEBIETE (Int. Cl.5 ) |
|---|---|
| | B01D <br> C01C |

Der vorliegende Recherchenbericht wurde für alle Patentansprüche erstellt

| Recherchenort | Abschlußdatum der Recherche | Prüfer |
|---|---|---|
| DEN HAAG | 21 JANUAR 1993 | VAN DER POEL W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes Dokument